# EUROPEAN PATENT APPLICATION

(11) **EP 4 487 967 A1**
(43) Date of publication of application: **08.01.2025**
(21) Application number: 24184032.1
(22) Date of filing: 24.06.2024
(51) Int. Cl.: B07B 4/02, B07B 11/02, B07B 11/06, B07B 9/02

(54) **WIND SORTING MACHINE**

(30) Priority: 06.07.2023 CN 202310824864; 06.07.2023 CN 202321765667 U; 21.02.2024 CN 202410193177
(71) Applicant: Zhejiang Boretech Environmental Engineering Co., Ltd., Pinghu, Zhejiang 314214 (CN)
(72) Inventor: OU, Zhewen, PINGHU, 314299 (CN); ZHOU, Jiaping, PINGHU, 314214 (CN)
(74) Representative: Schmidt, Steffen J.

(57) **Abstract**

This application provides a wind sorting machine (1). The wind sorting machine (1) includes a material mixing portion (11), a sorting portion (12), and a material collection platform (13). The sorting portion (12) is arranged around the material mixing portion (11). The sorting portion includes a feeding unit (120) and a sorting chamber (121). An inlet of the feeding unit (E120) is connected to a material outlet (C11). An inlet of the sorting chamber is connected to an outlet (C120) of the feeding unit (120). An upper end of the sorting chamber (121) is in communication with a centrifugal fan (141). The centrifugal fan (141) is configured to generate negative pressure in the sorting chamber (121) to screen materials. The material mixing portion (11) and the sorting portion (12) are arranged on the material collection platform (13). A material collection port (E13) of the material collection platform (13) is in communication with a lower end of the sorting chamber (121). The material collection platform (13) is configured to collect screened materials.

## Description

### Field of the Invention

This application relates to the field of plastic recycling technologies, and in particular, to a wind sorting machine.

### Background

Currently, various types of plastic bottles such as mineral water bottles, beverage bottles, tea bottles, and fresh milk bottles exist, which are cleaned and crushed during recycling, to produce recyclable plastic raw materials. However, labels are usually attached to outside of the plastic bottles, which are generally made of a plastic film. Therefore, plastic bottle fragments are usually mixed up with debris such as labels or dust. To effectively produce recyclable plastic raw materials, the debris such as labels or dust need to be separated out. However, the plastic recycling field currently has no efficient separator.

### Summary of the Invention

In view of the above, this application provides a wind sorting machine to resolve the above problem.

According to an embodiment of this application, a wind sorting machine is provided. The wind sorting machine includes a material mixing portion, a bin, a sorting portion, and a material collection platform. The sorting portion is arranged around the material mixing portion. The sorting portion includes a feeding unit and a sorting chamber. An inlet of the feeding unit is connected to a material outlet. An inlet of the sorting chamber is connected to an outlet of the feeding unit. An upper end of the sorting chamber is in communication with a centrifugal fan. The centrifugal fan is configured to generate negative pressure in the sorting chamber to screen materials. The material mixing portion and the sorting portion are arranged on the material collection platform. A material collection port of the material collection platform is in communication with a lower end of the sorting chamber. The material collection platform is configured to collect screened materials.

According to an embodiment of this application, the feeding unit includes a feeding tank. The feeding tank extends inclinedly downward from the inlet of the feeding unit to the outlet of the feeding unit.

According to an embodiment of this application, the feeding unit includes a feeding tank, a soft connection unit, and a chute. The soft connection unit extends downward from the inlet of the feeding unit to the feeding tank. The feeding tank extends horizontally from the soft connection unit to the chute. The chute extends inclinedly downward from the feeding tank to the outlet of the feeding unit.

According to an embodiment of this application, the width of an end of the feeding tank close to the inlet of the feeding unit is smaller than the width of an end of the feeding tank close to the outlet of the feeding unit.

According to an embodiment of this application, the feeding unit further includes an electromagnetic vibrator arranged immediately adjacent to a lower surface of the feeding tank.

According to an embodiment of this application, an air inlet hole is provided on a lower surface of the chute for preliminarily sorting the materials.

According to an embodiment of this application, the sorting chamber is vertically arranged on the material collection platform.

According to an embodiment of this application, the width of the upper end of the sorting chamber is smaller than the width of the lower end of the sorting chamber.

According to an embodiment of this application, the width of the upper end of the sorting chamber is equal to the width of the lower end of the sorting chamber.

According to an embodiment of this application, a cross section of the upper end of the sorting chamber is in a shape of a circle, and a cross section of the lower end of the sorting chamber is in a shape of a rectangle.

According to an embodiment of this application, the wind sorting machine further includes the bin. The material mixing portion is located directly above a center of the bin. A plurality of material outlets are uniformly distributed below the bin.

According to an embodiment of this application, an exterior of the bin is a conical cylinder structure with a wide bottom and a narrow top.

According to an embodiment of this application, an exterior of the bin is a straight cylinder structure with a constant width from top to bottom.

According to an embodiment of this application, the sorting portion includes a plurality of feeding units and a plurality of sorting chambers. Each of the plurality of feeding units is connected to a material outlet. The plurality of sorting chambers are vertically arranged on the material collection platform uniformly.

According to an embodiment of this application, the material mixing portion further includes a material mixing drum and a material mixing hopper. The material mixing hopper is arranged inside the material mixing drum. The material mixing hopper is connected to a motor through a connecting shaft. The motor drives the material mixing hopper to rotate to disperse the materials.

According to an embodiment of this application, the wind sorting machine further includes a fan system. The fan system includes the centrifugal fan and an air duct assembly. The air duct assembly includes a plurality of secondary air ducts respectively connected to upper ends of the plurality of sorting chambers.

According to an embodiment of this application, the diameters of ends of the secondary air ducts close to the sorting chambers are greater than the diameters of ends of the secondary air ducts away from the sorting chambers.

According to an embodiment of this application, the air duct assembly further includes an aggregation air duct and a primary air duct. The aggregation air duct is connected to the ends of the plurality of secondary air ducts away from the sorting chambers. The primary air duct has one end connected to the aggregation air duct and the other end connected to the centrifugal fan.

According to an embodiment of this application, the diameter of an end of the primary air duct close to the aggregation air duct is greater than the diameter of an end of the primary air duct close to the centrifugal fan.

In the wind sorting machine provided in this application, the materials are dispersed through the material mixing portion, so that the materials substantially evenly enter the bin, and then the materials are dispersedly distributed into the sorting chamber through the feeding unit. In addition, the structural design of the sorting chamber and the fan system increases a speed of air flows in the sorting chamber and the fan system, so that light and thin substances in the materials can be more effectively sucked away. In addition, the wind sorting machine is symmetrically designed with respect to a center, and includes a plurality of feeding units and a plurality of sorting chambers that can operate simultaneously. The wind sorting machine provided in this application significantly reduces sort difficulty and significantly increases sort efficiency.

### Brief description of the drawings

The drawings are intended to provide further understanding of this application and constitute a part of this application. The drawings and the following specific implementations are used together for explaining this application, but do not constitute a limitation on this application. In the drawings:
FIG. 1 is a schematic diagram of a wind sorting machine according to an embodiment of this application.
FIG. 2 is a schematic enlarged view of a material mixing portion, a bin, a sorting portion, and a material collection platform according to an embodiment of this application.
FIG. 3 is a perspective view of the material mixing portion according to an embodiment of this application.
FIG. 4A is a stereoscopic view of a feeding unit according to an embodiment of this application.
FIG. 4B is a side view of the feeding unit according to an embodiment of this application.
FIG. 5 is a schematic diagram of a sorting chamber according to an embodiment of this application.
FIG. 6 is a schematic enlarged view of a material mixing portion, a bin, a sorting portion, and a material collection platform according to another embodiment of this application.
FIG. 7A and FIG. 7B are respectively a stereoscopic view and a side view of a feeding tank and an electromagnetic vibrator according to an embodiment of this application.
FIG. 7C is a stereoscopicview of a chute according to an embodiment of this application.
FIG. 8 is a schematic diagram of a material trajectory in a sorting chamber according to an embodiment of this application.
FIG. 9 is a schematic diagram of the sorting chamber according to an embodiment of this application.

### Detailed Description

The following disclosure provides a plurality of implementations or examples, which may be used for achieving different features of the disclosure. Specific examples of assembles and configurations described below are used for simplifying the disclosure. It may be conceived that, the descriptions are merely examples and are not intended to limit the disclosure. For example, in the following description, that a first feature is formed on or above a second feature may include some embodiments in which the first feature and the second feature are in direct contact with each other, and may include some embodiments in which an additional assembly is formed between the first feature and the second feature, so that the first feature and the second feature may not be in direct contact with each other. In addition, in the disclosure, assembly symbols and/or labels may be reused in a plurality of embodiments. The reuse is for simplicity and clarity, and does not represent a relationship between different embodiments and/or configurations that are discussed.

Furthermore, use of terms spatially relative to each other such as "under", "below", "lower than", "on", "above" and similar terms thereof may be used for facilitating description of a relationship between an assembly or a feature shown in a figure and another assembly or feature or more assemblies or features. In addition to orientations shown in the figure, the terms spatially relative to each other are further intended to encompass a plurality of different orientations during usage or operation of a device. The device may be placed in another orientation (for example, may be rotated by 90 degrees or located in another orientation), and the terms spatially relative to each other should be explained accordingly.

Although numerical value ranges and parameters used for defining a relatively wide range of this application are approximate numerical values, relevant numerical values in specific embodiments are presented herein as accurately as possible. However, any numerical value essentially inevitably includes a standard deviation caused by a test method. Herein, "about" usually means that an actual numerical value falls within plus or minus 10%, 5%, 1%, or 0.5% of a specific numerical value or range. Alternatively, the term "about" represents that the actual numerical value falls within an acceptable standard error, which depends on a consideration of a person of ordinary skill in the art. It may be understood that, except experimental examples, or unless otherwise specified, all ranges, quantities, numerical values, and percentages (which are, for example, used for describing a material dosage, a duration, a temperature, an operating condition, a quantity ratio, and another similar factor) used herein are modified by "about". Therefore, unless otherwise specified, the numerical parameters disclosed in this specification and the appended claims are all approximate numerical values and may be changed as required. The numerical parameters should at least be understood to be numerical values obtained by applying a general notation system to stated significant digits. Herein, the numerical value ranges are represented as a range from an end point to another end point or a range between two endpoints. Unless otherwise specified, all numerical value ranges described herein include endpoints.

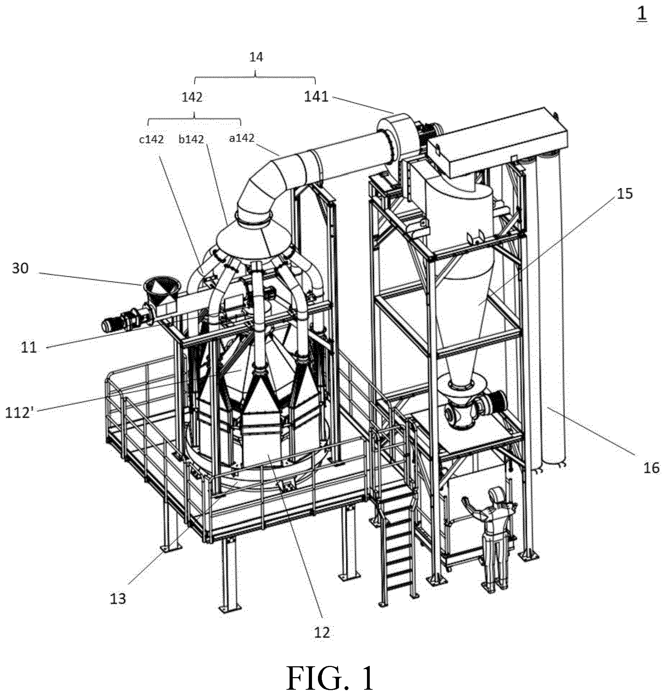

FIG. 1 is a schematic diagram of a wind sorting machine 1 according to an embodiment of this application. In some embodiments, the wind sorting machine 1 is configured to receive materials, including but not limited to plastic bottle fragments, and further including labels, dust, and the like. In some embodiments, the wind sorting machine 1 is a multi-channel wind sorting machine, which sorts and filters the materials, collects plastic bottle fragments in the materials, and filters out unexpected substances such as labels and dust through air. Specifically, the wind sorting machine 1 separates lightweight debris such as labels in PET bottle fragments through a negative pressure air flow based on a difference between aerodynamic characteristics (drift coefficients) of the bottle fragments and the labels mixed therein. In some embodiments, after the wind sorting machine 1 collects the plastic bottle fragments, the plastic bottle fragments are delivered to a next process (for example, cleaning, drying, etc.), to achieve recycling and reuse of the plastic bottle fragments. In some embodiments, the wind sorting machine 1 includes a material mixing portion 11, a bin 112', a sorting portion 12, a material collection platform 13, and a fan system 14. In some embodiments, the wind sorting machine 1 may further include a cyclone separator 15 and a dust collection bag 16.

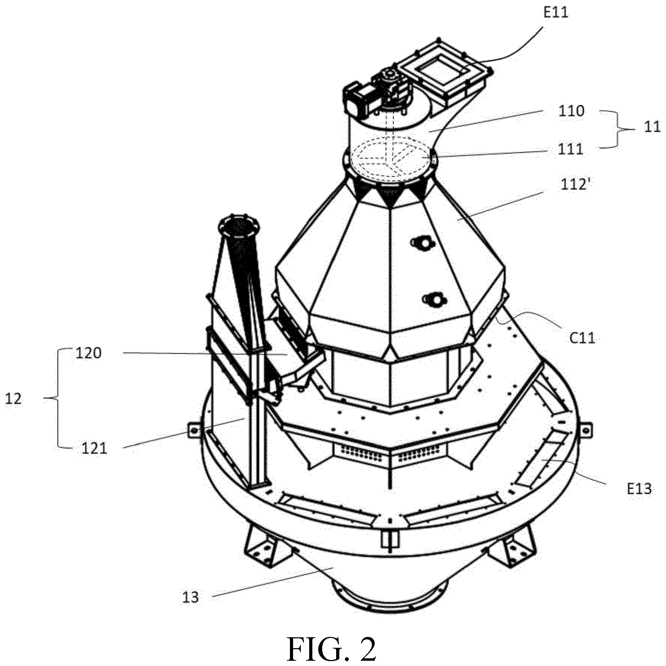

FIG. 2 is a schematic enlarged view of the material mixing portion 11, the bin 112', the sorting portion 12, and the material collection platform 13 according to an embodiment of this application. In some embodiments, the material mixing portion 11, the bin 112', and the sorting portion 12 are arranged on the material collection platform 13. The material mixing portion 11, the bin 112', the sorting portion 12, and the material collection platform 13 are coaxially arranged, and structures of the material mixing portion 11, the bin 112', the sorting portion 12, and the material collection platform 13 are symmetrical with respect to a center.

In some embodiments, the material mixing portion 11 includes a material mixing drum 110 and a material mixing hopper 111. In other embodiments, the material mixing portion 11 may further include a decelerator (not shown in the figure). In some embodiments, the material mixing drum 110 is substantially in a shape of a cylinder, and is arranged above the material mixing portion 11. The material mixing hopper 111 is arranged inside the material mixing drum 110. The material mixing drum 110 is provided with a material inlet E11 of the material mixing portion 11. Materials are fed into the material mixing drum 110 through the material inlet E11, and are substantially evenly distributed in the bin 112' through the material mixing hopper 111. An exterior of the bin 112' is a symmetrical conical structure. The material mixing portion 11 is arranged directly above a center of the bin 112'. A plurality of material outlets C11 are uniformly distributed below the bin 112'.

Inside of the bin 112' is substantially a chamber structure inclined downward. After entering the bin 112', the materials enter the sorting portion 12 through the material outlets C11 under the action of gravity.

In some embodiments, eight material outlets C11 are provided. However, this is not a limitation of this application. In other embodiments, more or less than eight material outlets C11 may be provided.

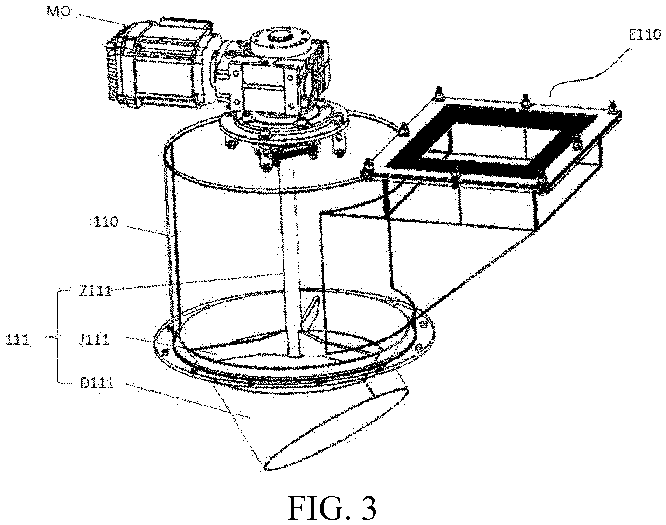

For a detailed structure inside the material mixing drum 110, refer to FIG. 3. FIG. 3 is a perspective view of the material mixing portion 11 according to an embodiment of this application. A connecting shaft Z 111 of the material mixing hopper 111 is arranged on a central axis of the material mixing drum 110. One end of the shaft Z111 is connected to a motor MO, and the other end is connected to a plurality of support shafts J111. The plurality of support shafts J111 are connected to inside of a discharge hopper D111 to provide support and disperse the materials to avoid an increase in sort difficulty as a result of gathering of the materials. The support shafts J111 are uniformly arranged in the discharge hopper D111, and extend radially along the material mixing drum 110. A lower part of the discharge hopper D111 is in communication with the bin 112'. The discharge hopper D111 is driven by the motor MO to rotate through the support shafts J111 and the connecting shaft Z111. After entering the material mixing drum 110, the materials are dispersed by the support shafts J111, and substantially evenly enter the bin 112' with the rotation of the discharge hopper D 111. In some embodiments, three support shafts J111 are arranged. However, this is not a limitation of this application. In other embodiments, more or less than three support shafts J111 may be arranged.

Still referring to FIG. 2, the sorting portion 12 is arranged around the material mixing portion 11 and the bin 112'. The sorting portion 12 includes a plurality of feeding units 120 and a plurality of sorting chambers 121. Each feeding unit 120 is correspondingly connected to each sorting chamber 121, and each feeding unit 120 is further connected to the corresponding material outlet C11. In other words, the sorting portion 12 includes eight feeding units 120 and eight sorting chambers 121, which are uniformly distributed around the bin 112'. However, for simplicity of the drawings and convenience of description, FIG. 2 shows only one feeding unit 120 and one sorting chamber 121.

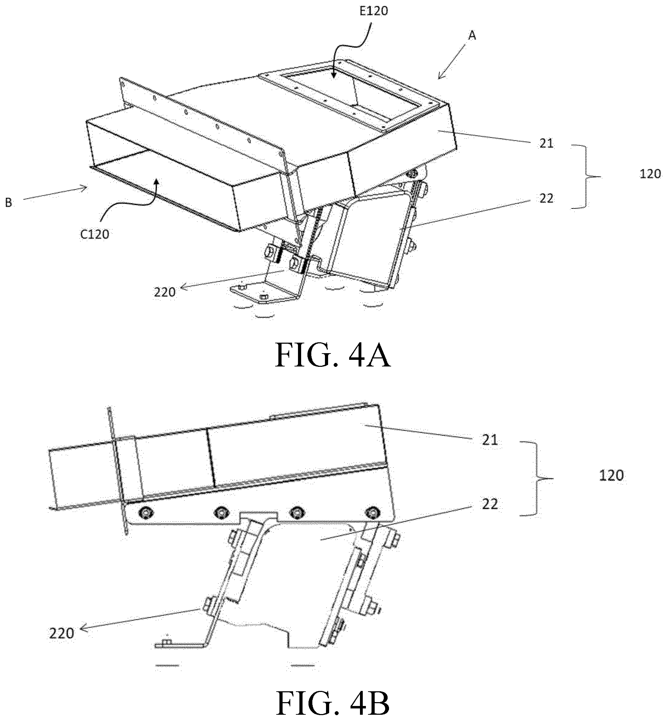

For a detailed structure of the feeding unit 120, refer to both FIG. 4A and FIG. 4B. FIG. 4A and FIG. 4B are respectively a stereoscopic view and a side view of the feeding unit 120 according to an embodiment of this application. In some embodiments, the feeding unit 120 includes a feeding tank 21 and an electromagnetic vibrator 22. An inlet E120 of the feeding unit 120 is provided on an upper surface of the feeding tank 21. An outlet C120 of the feeding unit 120 is provided on a side surface of the feeding tank 21. The inlet E120 is in communication with the material outlet C11 of the material mixing portion 11, and the outlet C120 is in communication with an inlet of the sorting chamber 121. A tank body of feeding tank 21 is substantially a structure inclined downward, so that the materials enter the feeding tank 21 through the material outlet C11 and the inlet E120, then move toward the outlet C120 in the feeding tank 21 under the action of the electromagnetic vibrator 22, and then enter the sorting chamber 121 through the outlet C120. In some embodiments, an inclination angle of the feeding tank 21 is in a range of about 5 degrees to 10 degrees. Preferably, the inclination angle of the feeding tank 21 is 8 degrees.

In some embodiments, when viewed from top or bottom, the feeding tank 21 is substantially a trapezoidal structure with a wide end and a narrow end. Specifically, the width of an end (an end A in the figure) of the feeding tank 21 close to the inlet E120 is less than the width of a tank body on an end (an end B in the figure) close to the outlet C120. In this configuration, the materials can be dispersed by the electromagnetic vibrator 22 during forward movement in the feeding tank 21, which avoids an increase in the sort difficulty as a result of gathering of the materials. In some embodiments, the width of the end (the end A in the figure) of the feeding tank 21 close to the inlet E120 is about 300 millimeters, and the width of the tank body on the end (the end B in the figure) close to the outlet C120 is about 600 millimeters.

In some embodiments, the electromagnetic vibrator 22 is configured to vibrate the feeding tank 21, so that the materials move forward in the feeding tank 21 not only under the action of the gravity but also the action of the vibration. In addition, the action of the vibration enables the materials to be dispersed more effectively, which avoids an increase in the sort difficulty as a result of gathering of the materials. The electromagnetic vibrator 22 may be connected to the feeding tank 21 through a screw, a snap, a magnetic snap, magnetic suction, or the like. However, this is not a limitation of this application. In some embodiments, the electromagnetic vibrator 22 is snugly arranged against a lower surface of the feeding tank 21. The electromagnetic vibrator 22 has an adjustment unit 220. An inclination angle of the electromagnetic vibrator 22 may be adjusted through the adjustment unit 220, thereby adjusting the inclination angle of the feeding tank 21. In some embodiments, the adjustment unit 220 may adjust an angle through a screw, a snap, or the like.

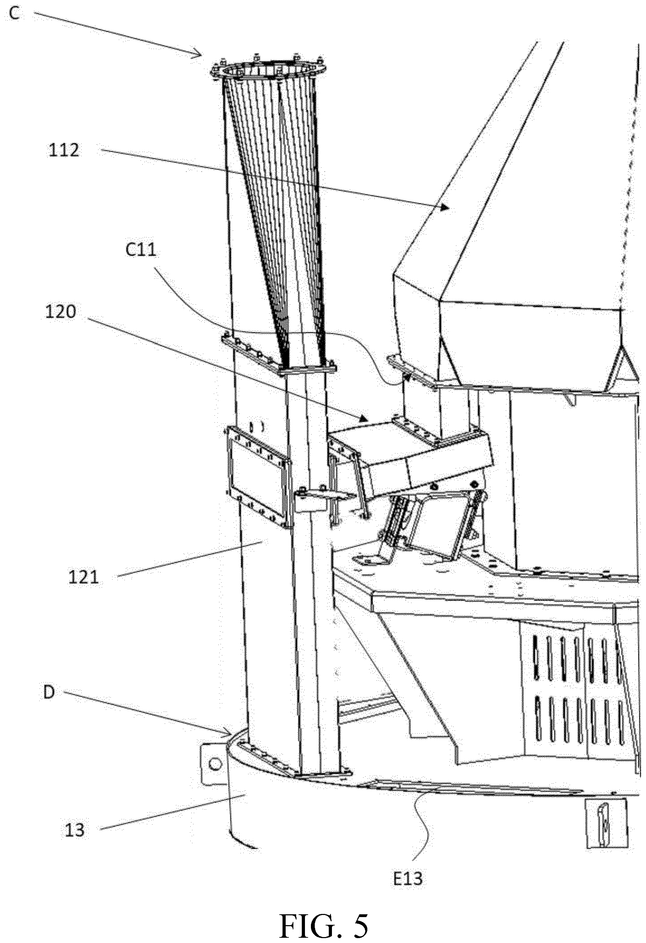

Refer to both FIG. 2 and FIG. 5. FIG. 5 is a schematic diagram of the sorting chamber 121 according to an embodiment of this application. In some embodiments, a plurality of material collection ports E13 are provided on the material collection platform 13. A quantity and positions of the material collection ports E13 correspond to the quantities and positions of the feeding units 120 and the sorting chambers 121. In other words, the material collection platform 13 includes eight material collection ports E13. A lower end of the sorting chamber 121 is in communication with the corresponding material collection port E13. An upper end of the sorting chamber 121 is in communication with a centrifugal fan 141 (shown in FIG. 1) of the fan system 14.

The centrifugal fan 141 generates negative pressure in the sorting chamber 121 and generate an upward air flow to screen the materials in the sorting chamber 121 through air. In some embodiments, the power of the centrifugal fan 141 is 15 KW, a generated air flow is about 12,000-15,000 m³/h, and a wind speed generated in the sorting chamber 121 is about 1-4 m/s. As shown in the figure, the sorting chamber 121 is vertically arranged on the material collection platform 13, so that when the materials are in the sorting chamber 121, heavy materials such as plastic bottle fragments can fall into the material collection platform 13 under the action of gravity, while light substances such as labels or dust in the materials are sucked into the cyclone separator 15 and the dust collection bag 16 through the upward air flow, thereby completing the screening of the materials. Through tests, the applicants found that a sort effect of more than 90% is achieved for the materials.

In some embodiments, the width of the upper end (an end C shown in the figure) of each sorting chamber 121 is smaller than the width of the lower end (an end D shown in the figure), and the speed of an air flow close to the upper end of the sorting chamber 121 is greater than the speed of an air flow close to the lower end of the sorting chamber 121. In some embodiments, a cross-sectional area of the upper end of each sorting chamber 121 is in a shape of a circle, to facilitate connection to the fan system, and a cross-sectional area of the lower end of each sorting chamber 121 is in a shape of a rectangle, to facilitate connection to the material collection port E13. Through tests, the applicants found that the design of the feeding unit 120 and the sorting chamber 121 shown in the embodiment of FIG. 2 achieves a sort effect of more than 90% for the materials.

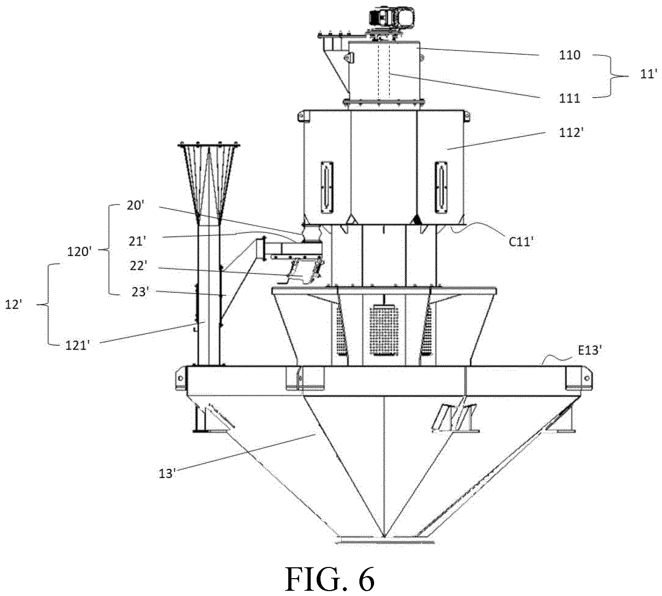

FIG. 6 is a schematic enlarged view of a material mixing portion 11', a bin 112', a sorting portion 12', and a material collection platform 13' according to another embodiment of this application. In some embodiments, the material mixing portion 11', the bin 112', and the sorting portion 12' are arranged on the material collection platform 13', the material mixing portion 11', the bin 112', the sorting portion 12', and the material collection platform 13' are coaxially arranged, and structures of the material mixing portion 11', the sorting portion 12', and the material collection platform 13' are symmetrical with respect to a center.

In some embodiments, the material mixing portion 11' includes a material mixing drum 110 and a material mixing hopper 111, wherein the material mixing drum 110 and the material mixing hopper 111 are the same as those in FIG. 2, and therefore details are omitted herein to save space. In the embodiment of FIG. 6, an exterior of the bin 112' is a symmetrical polygonal straight cylindrical structure with a constant width from top to bottom, so that the bin has a larger volume and is less prone to material blockage. Material outlets C 11' are uniformly distributed below the bin 112'. After entering the bin 112', materials enter the sorting portion 12' through the material outlets C11' under the action of gravity.

The sorting portion 12' is arranged around the bin 112'. The sorting portion 12' includes a plurality of feeding units 120' and a plurality of sorting chambers 121', wherein each feeding unit 120' is correspondingly connected to each sorting chamber 121', and each feeding unit 120' is further connected to the corresponding material outlet C11'. In other words, the sorting portion 12' also includes eight feeding units 120' and eight sorting chambers 121', which are uniformly distributed around the bin 112'. However, for simplicity of the drawings and convenience of description, FIG. 6 shows only one feeding unit 12'0 and one sorting chamber 121'.

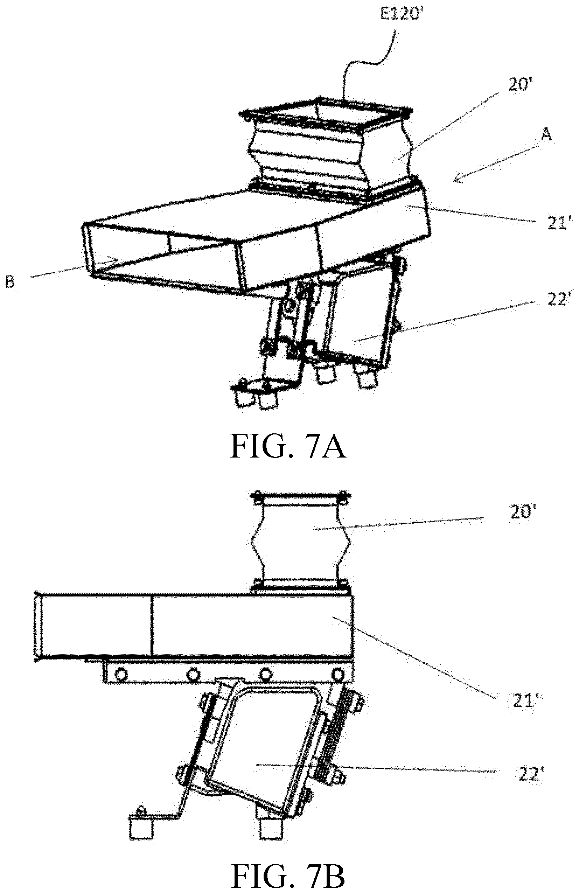

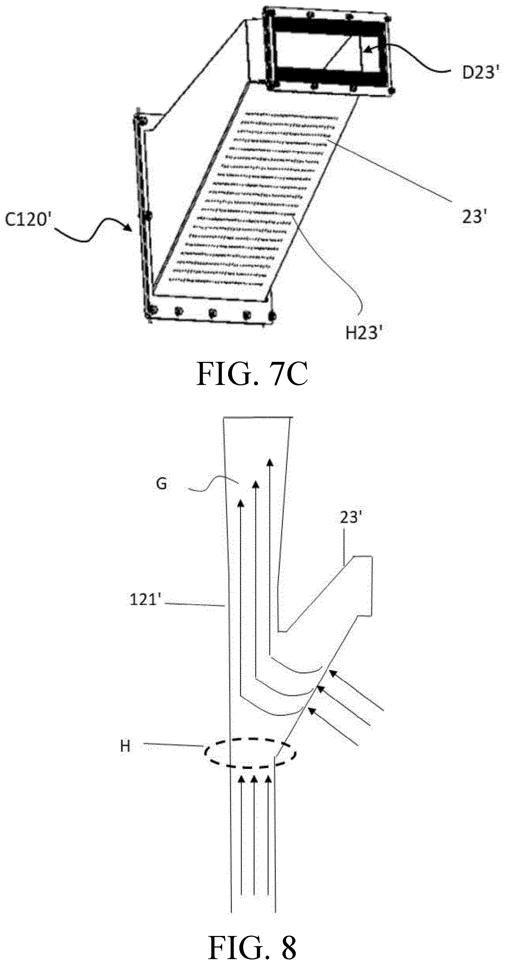

In some embodiments, the feeding unit 120' includes a soft connection unit 20', a feeding tank 21', an electromagnetic vibrator 22', and a chute 23'. Refer to FIG. 7A, FIG. 7B, and FIG. 7C, wherein FIG. 7A and FIG. 7B are respectively a stereoscopic view and a side view of the soft connection unit 20', the feeding tank 21', and the electromagnetic vibrator 22' according to an embodiment of this application, and FIG. 7C is a stereoscopic view of the chute 23' according to an embodiment of this application. An inlet E120' of the feeding unit 120' is provided on an upper end of the soft connection unit 20', and an outlet C120' of the feeding unit 120' is provided at an end port on an end of the chute 23' away from the feeding tank 21', wherein the inlet E120' is in communication with the material outlet C11', and the outlet C120' is in communication with an inlet. The soft connection unit 20' extends downward from the inlet E120' to the feeding tank 21'. A tank body of the feeding tank 21' extends horizontally from the soft connection unit 20' and is connected to an inlet D23 of the chute 23'. A chute body of the chute 23' extends inclinedly downward from the end port D23 and is connected to the sorting chamber 121'.

In some embodiments, when viewed from top or bottom, the feeding tank 21' is substantially a trapezoidal structure with a wide end and a narrow end. Specifically, the width of an end (an end A in the figure) of the feeding tank 21' close to the soft connection unit 20' is smaller than the width of a tank body on an end (an end B in the figure) close to the chute 23'. In this configuration, the materials can be more dispersedly distributed during movement in the feeding tank 21', which avoids an increase in sort difficulty as a result of gathering of the materials. In some embodiments, the width of the end (the end A in the figure) of the feeding tank 21' close to the inlet E120' is about 300 millimeters, and the width of the tank body on the end (the end B in the figure) close to the connection tank 23' is about 600 millimeters.

In some embodiments, the electromagnetic vibrator 22' is configured to vibrate the feeding tank 21', so that the materials move forward in the feeding tank 21' under the action of the vibration. In addition, the action of the vibration enables the materials to be dispersed more effectively, which avoids an increase in the sort difficulty as a result of gathering of the materials. The electromagnetic vibrator 22' may be connected to the feeding tank 21' through a screw, a snap, a magnetic snap, magnetic suction, or the like. However, this is not a limitation of this application. In some embodiments, the electromagnetic vibrator 22' is snugly arranged against a lower surface of the feeding tank 21'.

The materials enter the soft connection unit 20' and the feeding tank 21' through the material outlet C11' and the inlet E120', then move in the feeding tank 21' toward the chute 23' with the vibration, and are dispersed more dispersedly during the movement. The materials fall down through gravity in the chute 23'. A plurality of air inlet holes H23' are provided on a lower surface of the chute 23'. Air is introduced through the air inlet holes H23', so that the materials in the chute 23' may be preliminarily screened. Specifically, referring to a schematic diagram of FIG. 8, when the materials pass through the chute 23', light substances such as labels and dust are blown off a bottom of the chute 23' by the air introduced through the air inlet holes H23', while heavy bottle fragments are retained at the bottom of the tank, to achieve preliminary screening. The substances such as labels and dust blown off the bottom of the tank are more easily sucked upward by the air through the negative pressure generated by the centrifugal fan 141 in the sorting chamber 121', which forms a trajectory G shown in FIG. 8. Other materials that are not blown off the bottom of the chute 23' are screened for a second time through the negative pressure in the sorting chamber 121' at a connection H between the chute 23' and the sorting chamber 121'.

Compared to the embodiment shown in FIG. 2, in the embodiment shown in FIG. 6, due to the arrangement of the chute 23', the sorting chamber 121' is arranged outside at a farther position. Correspondingly, the volume of the material collection platform 13' is increased accordingly, which increases a capacity.

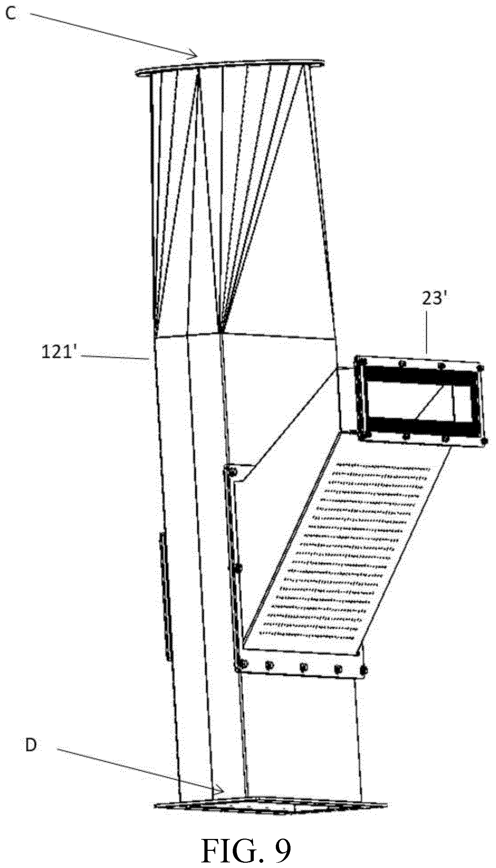

Refer to FIG. 6 and FIG. 9 in the same time. FIG. 9 is a schematic diagram of the sorting chamber 121' according to an embodiment of this application. In some embodiments, a plurality of material collection ports E13' are provided on the material collection platform 13'. A quantity and positions of the material collection ports E13' correspond to the quantities and positions of the feeding units 120' and the sorting chambers 121'. In other words, the material collection platform 13' includes eight material collection ports E13'. A lower end of the sorting chamber 121' is in communication with the corresponding material collection port E13'. An upper end of the sorting chamber 121' is in communication with the centrifugal fan 141 (shown in FIG. 1) of the fan system 14.

The centrifugal fan 141 generates negative pressure in the sorting chamber 121', and generate an upward air flow to screen the materials in the sorting chamber 121' through air. The sorting chamber 121' is vertically arranged on the material collection platform 13', so that when the materials are in the sorting chamber 121', heavy materials such as plastic bottle fragments can fall into the material collection platform 13' under the action of gravity, while light substances such as labels or dust in the materials are sucked into the cyclone separator 15 and the dust collection bag 16 through the upward air flow, thereby completing the screening of the materials. In some embodiments, the width of the upper end (an end C shown in the figure) of each sorting chamber 121' is the same as the width of the lower end (an end D shown in the figure). Therefore, the overall air flow speed in the sorting chamber 121' is substantially constant, which avoids mistakenly sucking away the bottle fragments by a strong air flow at the upper end of the sorting chamber 121'. In some embodiments, a cross-sectional area of the upper end of each sorting chamber 121 is in a shape of a circle, to facilitate connection to the fan system, and a cross-sectional area of the lower end of each sorting chamber 121' is in a shape of a rectangle, to facilitate connection to the material collection port E13'. Through tests, the applicants found that the design of the feeding unit 120' and the sorting chamber 121' shown in the embodiment of FIG. 6 achieves a sort effect of more than 99% for the materials. In addition, a higher analysis rate reduces a time required for a manual subsequent operation, thereby significantly increasing a production capacity.

Referring to FIG. 1 again, the fan system 14 includes the centrifugal fan 141 and an air duct assembly 142. The air duct assembly 142 includes a primary air duct a142, an aggregation air duct b 142, and a plurality of secondary air ducts c142. Each of the plurality of secondary air ducts c142 is connected between the corresponding sorting chamber 121 and the aggregation air duct b142. The primary air duct a142 is connected between the aggregation air duct b142 and the centrifugal fan 141. In some embodiments, the diameter of an end of each secondary air duct c142 close to the sorting chamber 121 is greater than the diameter of an end away from the sorting chamber 121, so that an air flow in the secondary air duct c142 has an increasing speed when moving further away from the sorting chamber 121, which facilitates suction of labels and dust through the air flow. The diameter of an end of the primary air duct a142 close to the aggregation air duct b142 is greater than the diameter of an end away from the aggregation air duct b142, so that an air flow in the primary air duct a142 has an increasing speed when moving further away from the collection cavity b142, which facilitates the suction of the labels and the dust through the air flow.

Light materials such as labels sucked away enter the cyclone separator 15 through the primary air duct a142 by the centrifugal fan 141, then fall into the space bag, and the space bag is transported by a person through a transport tool. Other substances such as dust are delivered into the dust collection bag 16 after the cyclone separator 15 removes majority of the air pressure, to maintain cleanliness.

It should be noted that, the wind sorting machine 1 provided in this application may further include other components. For example, the wind sorting machine 1 further includes a feeding spiral 30 (shown in FIG. 1). The feeding spiral 30 is in communication with the material inlet E11 of the material mixing portion 11, which helps a previous device to pour the materials for material sort. The specification of this application emphasizes the parts related to the inventive spirit of this application, and the other components included in the wind sorting machine 1 are omitted herein to save space.

As used herein, the terms "approximately", "substantially", "substantial", and "about" are used to describe and account for small variations. When used in conjunction with an event or a circumstance, the terms may refer to instances in which the event or circumstance occurs precisely as well as instances in which the event or circumstance occurs to a close approximation. As used herein with respect to a given numerical value or range, the term "about" generally means falling within a range of ±10%, ±5%, ±1%, or ±0.5% of the given numerical value or range. The range may be indicated herein as from one endpoint to another endpoint or between two endpoints. Unless otherwise specified, all ranges disclosed herein include endpoints. The term "substantially coplanar" may refer to two surfaces within a few micrometers (µm) positioned along a same plane, for example, within 10 µm, 5 µm, 1 µm, or 0.5 µm positioned along a same plane. When reference is made to "substantially" the same numerical values or characteristics, the term may refer to a numerical value within ±10%, ±5%, ±1%, or ±0.5% of an average of the numerical values.

As used herein, the terms "approximately", "substantially", "substantial", and "about" are used to describe and explain small variations. When used in conjunction with an event or a circumstance, the terms may refer to instances in which the event or circumstance occurs precisely as well as instances in which the event or circumstance occurs to a close approximation. For example, when used in combination with a numerical value, the term may mean a range of variation less than or equal to ±10% of the numerical value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if a difference between two numerical values is less than or equal to ±10% of an average of the numerical values (for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%), it may be considered that the two values are "substantially" or "about" the same. For example, "substantially" parallel may refer to a range of angular variation less than or equal to ±10° with respect to 0°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°. For example, "substantially" perpendicular may refer to a range of angular variation less than or equal to ±10° with respect to 90°, for example, less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

For example, if a displacement between two surfaces is equal to or less than 5 µm, equal to or less than 2 µm, equal to or less than 1 µm, or equal to or less than 0.5 µm, the two surfaces may be considered to be coplanar or substantially coplanar. If a displacement between any two points on a surface relative to a plane is equal to or less than 5 µm, equal to or less than 2 µm, equal to or less than 1 µm, or equal to or less than 0.5 µm, the surface may be considered to be planar or substantially planar.

As used herein, unless otherwise specified in the context, the singular terms "a/an" and "the" may include a plurality of referents. In the description of some embodiments, an assembly provided "on" or "above" another assembly may encompass a case in which the preceding assembly is directly on the succeeding assembly (for example, is in physical contact with the succeeding assembly) and a case in which one or more intermediate assemblies are located between the preceding assembly and the succeeding assembly.

As used herein, for ease of description, terms spatially relative to each other such as "under", "below", "lower portion", "above", "upper portion", "lower portion", "left side", and "right side" may be used herein to describe a relationship between an assembly or feature and another assembly or feature illustrated in the figures. In addition to the orientations described in the figures, the terms spatially relative to each other are intended to encompass different orientations of a device during use or operation. The device may be oriented in another manner (rotated by 90 degrees or located in another orientation), and the terms spatially relative to each other used herein may be explained accordingly. It should be understood that, when an assembly is referred to as being "connected" or "coupled" to another assembly, the assembly may be directly connected to or coupled to the another assembly, or an intermediate assembly may exist.

A plurality of embodiments of the present disclosure and detailed features are briefly described above. The embodiments described in the present disclosure may be easily used as a basis for designing or modifying other processes and a structure configured to execute the same or similar purposes and/or obtain the same or similar advantages introduced in the embodiments of the present disclosure. Such equivalent construction does not depart from the spirit and scope of the present disclosure, and various variations, replacements, and modifications may be made without departing from the spirit and scope of the present disclosure.

## Claims

1. A wind sorting machine, **characterized in that**, comprising:
a material mixing portion;
a sorting portion, arranged around the material mixing portion, and comprising a feeding unit and a sorting chamber, an inlet of the feeding unit being connected to a material outlet, an inlet of the sorting chamber being connected to an outlet of the feeding unit, an upper end of the sorting chamber being in communication with a centrifugal fan, and the centrifugal fan generating negative pressure in the sorting chamber to screen materials; and
a material collection platform, the material mixing portion and the sorting portion being arranged on the material collection platform, a material collection port of the material collection platform being in communication with a lower end of the sorting chamber, and the material collection platform collecting screened materials.

2. The wind sorting machine according to claim 1, **characterized in that**, the feeding unit comprises a feeding tank, the feeding tank extending inclinedly downward from the inlet of the feeding unit to the outlet of the feeding unit.

3. The wind sorting machine according to claim 1, **characterized in that**, the feeding unit comprises a feeding tank, a soft connection unit, and a chute, the soft connection unit extending downward from the inlet of the feeding unit to the feeding tank, the feeding tank extending horizontally from the soft connection unit to the chute, and the chute extending inclinedly downward from the feeding tank to the outlet of the feeding unit.

4. The wind sorting machine according to claim 2 or 3, **characterized in that**, the width of an end of the feeding tank close to the inlet of the feeding unit is smaller than the width of an end close to the outlet of the feeding unit.

5. The wind sorting machine according to claim 2 or 3, **characterized in that**, the feeding unit further comprises an electromagnetic vibrator arranged immediately adjacent to a lower surface of the feeding tank.

6. The wind sorting machine according to claim 3, **characterized in that**, an air inlet hole is provided on a lower surface of the chute to preliminarily screen the materials.

7. The wind sorting machine according to claim 1, **characterized in that**, the sorting chamber is vertically arranged on the material collection platform.

8. The wind sorting machine according to claim 7, **characterized in that**,the width of the upper end of the sorting chamber is smaller than the width of the lower end of the sorting chamber.

9. The wind sorting machine according to claim 7, **characterized in that**, the width of the upper end of the sorting chamber is equal to the width of the lower end of the sorting chamber.

10. The wind sorting machine according to claim 8 or 9, **characterized in that**, a cross section of the upper end of the sorting chamber is in a shape of a circle, and a cross section of the lower end of the sorting chamber is in a shape of a rectangle.

11. The wind sorting machine according to claim 1, **characterized in that**, further comprising:
a bin, the material mixing portion being located directly above a center of the bin, and a plurality of material outlets being uniformly distributed below the bin.

12. The wind sorting machine according to claim 11, **characterized in that**, an exterior of the bin is a cone-shaped cylindrical structure with a wide bottom and a narrow top.

13. The wind sorting machine according to claim 11, **characterized in that**, an exterior of the bin is a straight cylindrical structure with a constant width from top to bottom.

14. The wind sorting machine according to claim 11, **characterized in that**, the sorting portion comprises a plurality of feeding units and a plurality of sorting chambers, each of the plurality of feeding units being connected to a material outlet, and the plurality of sorting chambers being vertically arranged on the material collection platform uniformly.

15. The wind sorting machine according to claim 14, **characterized in that**, the material mixing portion further comprises a material mixing drum and a material mixing hopper, the material mixing hopper being arranged inside the material mixing drum, the material mixing hopper being connected to a motor through a connecting shaft, and the motor driving the material mixing hopper to rotate to disperse the materials.

16. The wind sorting machine according to claim 11, **characterized in that**, further comprising:
a fan system, comprising the centrifugal fan and an air duct assembly,
the air duct assembly comprising a plurality of secondary air ducts respectively connected to upper ends of a plurality of sorting chambers.

17. The wind sorting machine according to claim 16, **characterized in that**, the diameters of ends of the secondary air ducts close to the sorting chambers are greater than the diameters of ends away from the sorting chambers.

18. The wind sorting machine according to claim 17, **characterized in that**, the air duct assembly further comprises:
an aggregation air duct, connected to the ends of the plurality of secondary air ducts away from the sorting chambers; and
a primary air duct, having one end connected to the aggregation air duct and the other end connected to the centrifugal fan.

19. The wind sorting machine according to claim 18, wherein the diameter of an end of the primary air duct close to the aggregation air duct is greater than the diameter of an end close to the centrifugal fan.
